# EUROPEAN PATENT APPLICATION

(11) **EP 0 599 483 A1**
(43) Date of publication of application: **01.06.1994**
(21) Application number: 93308534.2
(22) Date of filing: 26.10.1993
(51) Int. Cl.: C09K 19/54, G02F 1/1333

(54) **A liquid crystal sheet**

(30) Priority: 26.10.1992 JP 80176/92
(71) Applicant: JAPAN GORE-TEX, INC., Setagaya-ku Tokyo 156 (JP)
(72) Inventor: Okino, Koichi, Okayama-ken 703 (JP); Fukutake, Sunao, Okayama-shi, Okayama-ken 703 (JP); Ohashi, Kazuhiko, Akaiwa-gun, Okayama-ken 709-08 (JP)
(74) Representative: McCallum, William Potter

(57) **Abstract**

A precursor assembly for a liquid crystal display is made of a porous polytetrafluoroethylene film (3) having its pores substantially filled with liquid crystals (2). Both surfaces of the liquid crystal-filled polytetrafluoroethylene film (3) are covered by thin non-porous synthetic polymer films (4,5) and the edges of the layered assembly are hermetically sealed. The precursor assembly permits long term storage of liquid crystals in ready-to-use sheet form for easy inclusion into a liquid crystal display.

## Description

This invention relates to an article containing liquid crystals, more particularly, to an article having a porous polytetrafluoroethylene (PTFE) matrix sheet impregnated with liquid crystals.

In the past, in order to manufacture liquid crystal displays, transparent substrates having transparent electrodes and oriented films on them were prepared. The transparent substrates, with the transparent electrodes and oriented films facing each other, were spaced apart with numerous spacers, several micrometers in diameter, interspersed between them to provide a constant gap. Liquid crystals were injected into the gap between the substrates to form a liquid crystal layer between the substrates. Such injection operations were extremely time consuming, requiring 6 to 12 hours to produce elements for displays having large image planes (about 10 inches, or 25.4 centimeters, in size).

More recently, formation of liquid crystal layers by impregnation of porous articles has been proposed. For example, Japanese Laid-Open Patent Application 56-11436 discloses an article consisting of a porous sheet of acrylonitrile-based copolymer, polypropylene, or polycarbonate impregnated with liquid crystals, laminated between two sheets of 50 micrometers thick polyester film having transparent vapor-deposited indium oxide electrode layers on them. Although improving the manufacture of liquid crystal displays, the article described above exhibits poor retentivity of the liquid crystals introduced into it, so the liquid crystals must be impregnated into it, by a time consuming and difficult procedure, at the time the liquid crystal display is manufactured. Also, the electrode substrates, i.e. the polyester films, of the article require an orientation treatment in order to obtain desired orientational properties in the liquid crystals.

According to the present invention, there is provided a layered article comprising
a layer of porous polytetrafluoroethylene film having a pore volume of 50 percent or greater, and having its pores substantially filled with liquid crystals;
said layer of porous polytetrafluoroethylene film being located between, and in contact with, layers of non-porous transparent films of synthetic polymer to form a layered article;
said layered article being hermetically sealed at its edges.

The article of the invention provides a precursor assembly for a liquid crystal display in which liquid crystals are contained in a ready-to-use manner that facilitates handling, permits long-term storage, simplifies manufacture of the liquid crystal display, and does not require a special orientation treatment in order to obtain the desired orientational properties in the liquid crystals.

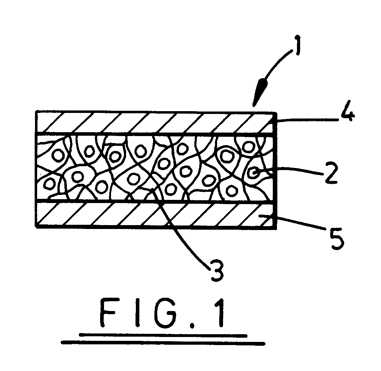

An embodiment of the present invention will now be described, by way of example, with reference to the accompanying drawing, in which Figure 1 is a cross-sectional view of an article according to the present invention.

Referring to Figure 1, a layered article 1 of the invention is shown having a layer of porous polytetrafluoroethylene film 3 located between, and in contact with, two layers of non-porous transparent material 4,5. The pores of the porous polytetrafluoroethylene film 3 are essentially completely filled with liquid crystals 2.

By "porous" as used herein is meant a structure of interconnected pores or voids such that continuous passages and pathways through the material are provided.

By "transparent" as used herein is meant the capability of transmitting light with little or no loss in intensity.

The porous polytetrafluoroethylene film 3 should have certain physical and optical properties that make it suitable for use in an element for a liquid crystal display. The polytetrafluoroethylene film need not be transparent in and of itself, nor must the material have the same refractive index as the liquid crystals to be impregnated into it, so long as the desired transparency can be obtained when its pores are filled with the liquid crystals. The porous polytetrafluoroethylene film should be thin, preferably having a thickness in the range of 5 to 50 micrometers. A thickness in excess of 50 micrometers is undesirable because of reduced light transmissivity through the film, even when filled with liquid crystals. The porous polytetrafluoroethylene film should have a pore volume of 50 to 95 percent, preferably in the range 80 to 95 percent. High pore volume enhances transparency by reducing the amount of light-interfering material present in the polytetrafluoroethylene matrix film. However, a balance must be achieved between pore volume of the film and film strength required for handling. A pore volume in excess of 95 percent can lead to a film too weak to be filled with liquid crystals, or too open to retain them. The nominal pore size of the film should be 2 to 10 micrometers, preferably in the range 3 to 5 micrometers. Larger pore sizes, while easier to fill, can lead to problems with retention of the liquid crystals in the film. Pore sizes smaller than 2 micrometers are more difficult to fill with liquid crystals. The porous polytetrafluoroethylene film, because of the well known chemical inertness of polytetrafluoroethylene, provides a matrix that will not affect, nor be affected by, the liquid crystals in its pores, and thus provides stable unchanging properties to the assembly.

The porous polytetrafluoroethylene film 3 can be made by methods known in the art, for example, by papermaking processes, by processes which include mixing polytetrafluoroethylene with filler materials that are subsequently removed, and by stretching and expansion processes. Preferably, the porous polytetrafluoroethylene film is a film of expanded polytetrafluoroethylene having a porous structure of nodes interconnected by fibrils. Such films can be made by uniaxial or biaxial stretching of polytetrafluoroethylene according to the methods disclosed in U.S. Patent Nos. 3,953,566 and 4,187,390, incorporated herein by reference.

The liquid crystals 2 to be impregnated into the porous polytetrafluoroethylene film 3 may be selected from among many liquid crystal materials suitable for use in liquid crystal displays that are known in the art. No particular limitations are imposed. For example, nematic, smectic, and cholesteric liquid crystals, and the like, may be used. The liquid crystals will be selected according to the properties desired in the liquid crystal display and according to whether an electric field or magnetic field will be applied to change their orientation and related optical properties.

The liquid crystals 2 can be impregnated into the porous polytetrafluoroethylene film 3 by conventional methods such as by immersion of the film into the liquid crystals, or by coating methods such as spray-coating, roll-coating, and the like. It is important that the film 3 be impregnated in a manner such that air or other gases, are essentially completely excluded from the pores, and that the pores are essentially completely filled with the liquid crystals 2. This can be accomplished, for example, by performing the operation in a vacuum chamber, or by vacuum degassing the fully impregnated film, preferably at a pressure of 20 Torr or lower.

Transparent non-porous films 4, 5 are placed in direct contact with the two surfaces of the porous polytetrafluoroethylene film 3 filled with liquid crystals 2. Again, it is important to prevent air, or other gases, from being trapped between the layers, or otherwise placed in contact with the liquid crystals. The presence of air in contact with the liquid crystal material can lead to chemical degradation of the liquid crystals and, if present as bubbles, can cause unwanted diffraction or refraction of light, loss of transparency, and other spurious optical effects when used in a liquid crystal display. The transparent non-porous outer films 4, 5 are press-bonded to the surface of the porous polytetrafluoroethylene film 3. No adhesives are used to adhere the layers together, because such use increases the thickness of the assembly, and can lead to non-uniformities in the thickness of the liquid crystal layer as well as create harmful optical effects. After the transparent films 4, 5 are press-bonded to the liquid crystal-filled porous polytetrafluoroethylene layer 3, the edges of the assembly are hermetically sealed, for example with an epoxy resin or other suitable sealant in order to prevent intrusion of air or moisture. Such sealants may include thermoplastic, thermosetting, or reaction-curing synthetic polymers, as are known in the art.

The transparent non-porous films 4, 5 preferably have a light transmissivity of 85 percent or greater, a thickness of 50 micrometers or less, preferably in the range 5 to 10 micrometers, and are substantially air-impermeable. Synthetic polymer films having these properties and suitable for use in liquid crystal displays are known in the art, and are available commercially from many sources. They may be selected from the group consisting of, but not limited to, polyesters, polyimides, polyolefins, polyether sulfones, acrylic polymers, fluoropolymers, and silicone polymers.

The layered article of the invention, as described above, provides liquid crystals in a sheet form which is easy to handle, and which can be easily incorporated into a liquid crystal display. The liquid crystals can be prepared for use in a simple separate operation and, furthermore, because they are hermetically sealed, can be stored, ready for use, for long periods of time. Moreover, the layered article of the invention requires no special orientation treatment for use in a liquid crystal display. When assembling a liquid crystal display, the layered article of the invention will be simply pressed directly against a transparent substrate fitted with transparent electrodes. The liquid crystals 2 in the layered article can then be oriented by an electric field applied by electrodes located outside the thin transparent outer films 4, 5 of the layered article.

### Example 1

A biaxially stretched porous expanded polytetrafluoroethylene film having a thickness of 10 micrometers, a pore volume of 50 percent, and a nominal pore diameter of 2 micrometers was impregnated with liquid crystals (LIXION 21001-000XX, made by Chisso Sekiyu Kagaku KK) by a coating technique. The impregnated film was then vacuum degassed in a vacuum chamber, at a pressure of approximately 10 Torr. Thin, 7 micrometers thick, tetrafluoroethylene/hexafluoropropylene copolymer (FEP) films (Neoflon® FEP, manufactured by Daikin Co.) were press-bonded to the surfaces of the impregnated film, after which the edges were sealed; thus forming an article of the invention having a thickness of 24 micrometers.

The article was tested by sandwiching it between a pair of transparent electrode substrates to form a liquid crystal display. An electric field was established by applying electricity at 10 volts - 60 Herz. The liquid crystals were oriented by the electric field so that satisfactory contrast was obtained.

### Example 2

A biaxially stretched porous expanded polytetrafluoroethylene film having a thickness of 50 micrometers, a pore volume of 70 percent, and a nominal pore diameter of 5 micrometers was impregnated with liquid crystals (LIXION 21001-000XX, made by Chisso Sekiyu Kagaku KK) by a coating technique. The impregnated film was then vacuum degassed in a vacuum chamber, at a pressure of approximately 10 Torr. Thin, 7 micrometers thick, tetrafluoroethylene/hexafluoropropylene copolymer (FEP) films (Neoflon® FEP, manufactured by Daikin Co.) were press-bonded to the surfaces of the impregnated film, after which the edges were sealed; thus forming an article of the invention having a thickness of 60 micrometers.

The article was tested by sandwiching it between a pair of transparent electrode substrates to form a liquid crystal display for use as a dimming sheet. Highly contrasting bright (transparent) and dark (light scattering) modes were developed by the liquid crystals as electricity to the electrodes was switched on and off.

## Claims

1. A layered article comprising
a layer of porous polytetrafluoroethylene film having a pore volume of 50 percent or greater, and having its pores substantially filled with liquid crystals;
said layer of porous polytetrafluoroethylene film being located between, and in contact with, layers of non-porous transparent films of synthetic polymer to form a layered article;
said layered article being hermetically sealed at its edges.

2. A layered article as claimed in Claim 1, wherein the porous polytetrafluoroethylene film has a pore volume of 70 percent or greater.

3. A layered article as claimed in Claim 2, wherein the porous polytetrafluoroethylene film has a pore volume of 85 percent or greater.

4. A layered article as claimed in any of Claims 1 to 3, wherein the non-porous transparent films of synthetic polymer have a thickness of 50 micrometers or less.

5. A layered article as claimed in Claim 4, wherein the non-porous transparent films of synthetic polymer have a thickness of 25 micrometers or less.

6. A layered article as claimed in any preceding claim, wherein the porous polytetrafluoroethylene film is porous expanded polytetrafluoroethylene.

7. A layered article as claimed in any preceding claim, wherein the non-porous transparent film of synthetic polymer is a fluoropolymer.
